# EUROPÄISCHE PATENTSCHRIFT

(11) **EP 1 323 944 B1**
(45) Veröffentlichungstag und Bekanntmachung des Hinweises auf die Patenterteilung: **14.02.2007**
(21) Anmeldenummer: 02028771.0
(22) Anmeldetag: 23.12.2002
(51) Int. Cl.: F16D 69/02, C04B 35/80, C04B 35/573

(54) **Reibscheiben aus faserverstärkten keramischen Verbundswerkstoffen**
Fiber reinforced ceramic composite friction disc
Disque de friction en matériau composite céramique renforcée par des fibres

(30) Priorität: 31.12.2001 DE 10164229
(43) Veröffentlichungstag der Anmeldung: 02.07.2003
(73) Patentinhaber: SGL CARBON AG, 65203 Wiesbaden (DE)
(72) Erfinder: Bauer, Moritz, 86153 Augsburg (DE); Kienzle, Andreas, Dr., 86753 Möttingen OT Balgheim (DE); Krätschmer, Ingrid, 86485 Biberbach (DE); Krupka, Mario, 86477 Adelsried (DE)
(74) Vertreter: Deckers, Hellmuth Alexander

(56) Entgegenhaltungen:
- EP-A- 1 211 231
- WO-A-02/26659
- WO-A-99/41069
- FR-A- 2 781 852
- US-A- 6 042 935

## Beschreibung

Die Erfindung bezieht sich auf Reibscheiben aus faserverstärkten keramischen Verbundwerkstoffen. Insbesondere bezieht sich die Erfindung auf Kupplungsscheiben für Kraftfahrzeuge und ein Herstellungsverfahren von Reibscheiben aus diesen Verbundwerkstoffen, wobei diese Reibscheiben die faserverstärkten keramischen Verbundwerkstoffe, insbesondere solche, die mit Kohlenstoffasern verstärkt sind, umfassen, speziell gewebeverstärktes C/SiC - Kernmaterial (mit Kohlenstoffasern verstärkte Materialien, deren Matrix Siliciumcarbid enthält) und eine keramische Reibschicht, die überwiegend SiC-Phasen enthält.

Seit langem ist es bekannt, für Reibbeläge von Kupplungen Mineralfaserstoffe zu verwenden. Besonders gut geeignet sind hierfür Asbestwerkstoffe. Der Einsatz dieser asbesthaltigen Materialien ist heutzutage jedoch ökologisch nicht mehr vertretbar, so daß nahezu ausschließlich Werkstoffe auf Basis anderer Mineralfasern zum Einsatz kommen. Wegen der gestiegenen Motorleistungen, Fahrzeuggeschwindigkeiten und Fahrzeuggewichten sind auch die Anforderungen an die tribologischen Eigenschaften von Kupplungsscheiben im KFZ-Bereich gestiegen; daher werden zunehmend auch neue Werkstoffpaarungen erprobt.

Von besonderem Interesse sind hierbei mit Kohlenstoffasern verstärkte Verbundwerkstoffe oder Keramiken, insbesondere solche mit SiC-haltiger Matrix. Diese Werkstoffe zeichnen sich durch hohe Temperaturbeständigkeit, geringen Verschleiß und gute tribologische Eigenschaften aus.

In der DE-A 199 39 545 wird vorgeschlagen, zur Erhöhung der Belastbarkeit und Leistungsfähigkeit gegenüber dem Stand der Technik Kupplungsscheiben mit Reibbelägen aus mit Kohlenstoffasern verstärktem Siliciumcarbid (SiC) zu verwenden. Nachteilig ist hierbei, daß die Herstellung einer dichten SiC-Matrix mit einer Faserverstärkung aus Kohlenstoffasern technisch nur aufwendig zu realisieren ist. Ein technischer Fortschritt bei der Materialsynthese wurde durch die Silicium-Flüssiginfiltration von mit Kohlenstoffasern verstärkten kohlenstoffhaltigen Vorkörpern erreicht, wobei im allgemeinen mit Kohlenstoffasern verstärkte Verbundwerkstoffe mit Si- und SiC-Matrix entstehen.

Aus dem Dokument FR 2 781 852 A1 sind Reibelemente insbesondere für Scheibenbremsen bekannt, wobei eine erste, den Tragkörper bildende Struktur, mehrere Gewebelagen umfaßt. In dem Dokument EP 1 211 231 A1 werden Reibkörper aus mit Silicium infiltriertem und mit Fasern aus Kohlenstoff verstärktem, porösem Kohlenstoff beschrieben, die einen Kernkörper und eine Reibschicht umfassen. Aus dem Dokument WO99/41 069 ist ein Verfahren zur Herstellung eines Faserverbundwerkstoffs bekannt, wobei aus unterschiedlichen Preßmassen enthaltend Fasern unterschiedlicher Qualität und/oder in unterschiedlichen Anteilen Grünkörper gepreßt werden. Aus WO02/26659 sind Reib- oder Gleitkörper bekannt, die mindestens zwei mit Faserbündeln verstärkte Werkstoffe umfassen, wobei die mindestens zwei Werkstoffe verschiedene Anteile an Faserbündeln enthalten, die jeweils unterschiedliche mittlere Faserbündellängen aufweisen. In der US 6,042,935 ist ein Reibelement offenbart, das durch Zusammensetzen unterschiedlicher Körper herstellbar ist, wobei eine Bindeschicht zwischen den Körpern vorgesehen ist, die einen Einsatz beispielsweise aus einer Matte oder einem Vlies aus Kohlenstoff enthalten kann.

In der WO-A 00/41982 werden Keramikkörper für Bremsscheiben vorgeschlagen, die aus einer Kern- und einer Reibschicht zusammengesetzt sind, wobei der Kernkörper durch mindestens eine langfaserverstärkte Schicht, bevorzugt mit zueinander winkelversetzten UD-Schichten (Schichten aus "unidirectional tapes", also Bändern, die parallel liegende Endlosfasem enthalten), aufgebaut wird. Zwischen den UD-Schichten sind gegebenenfalls weitere Schichten aus kurzfaserverstärktem Material oder gewebeverstärktem Material angeordnet. Für hohe Rotationsgeschwindigkeiten, die besonders für Kupplungsscheiben gefordert werden, hat sich gezeigt, daß die UD-Faserlagen aufgrund der geringen Zugfestigkeit senkrecht zur Faserrichtung weniger geeignet sind.

Bezüglich der Oxidationsbeständigkeit bei höchsten Temperaturen und unter Dauerbetrieb insbesondere bei Bremsscheiben haben sich kurzfaserverstärkte C/SiC-Varianten bewährt. Die für Kupplungsscheiben geforderten hohen Drehzahlen werden aber mit den kurzfaserverstärkten C/SiC-Varianten nicht erreicht.

Aus den Anmeldungen EP-A 1 124 074 und EP-A 1 124 071 sind Bremsscheiben aus C/SiC und Herstellungsverfahren dafür bekannt, bei denen neben kurzfaserbündelverstärktem Grundmaterial auch Langfasern zur Verstärkung vorgesehen sind. Die Langfasern erstrecken sich um die Form der Bremsscheibe. Hierdurch soll das Rißwachstum gebremst und die Scheibenfestigkeit erhöht werden. Die beschriebenen Scheiben weisen allerdings keine gesonderten SiC-reichen Reibschichten auf, die sich insbesondere für schnell rotierende Brems- und Kupplungsscheiben als vorteilhaft erwiesen haben.

Zur Erzielung hoher Langfasergehalte und einer über das gesamte Bauteil gleichmäßigen Langfaserverteilung sind die Herstellungsverfahren aus EP-A 1 124 074 und EP-A 1 124 071 weniger gut geeignet. Beides ist aber Voraussetzung für eine weitere Steigerung der Festigkeit gegenüber der rotierenden Belastung.

Aufgabe der Erfindung ist es daher, gegenüber diesem Stand der Technik eine Verbesserung der Festigkeit von faserverstärkten Reibscheiben, insbesondere Kupplungsscheiben, bei hohen Drehzahlen oder Rotationsgeschwindigkeiten zu erreichen, wobei gleichzeitig gute Reibeigenschaften der Reibflächen und ein günstiges Oxidationsverhalten realisiert werden sollen. Die Kupplungsscheiben sollen mit dem technisch und ökonomisch effizienten Flüssigsilicierverfahren herstellbar sein.

Die Aufgabe wird gelöst durch die Bereitstellung von Reibscheiben enthaltend eine Reibschicht und eine Kernzone aus faserverstärkten keramischen Verbundwerkstoffen, die durch mehrere Lagen von multidirektionalem Fasergewebe verstärkt sind, wobei die einzelnen Lagen unterbrochen werden durch Matrixbereiche, wobei die Matrix Phasen aus Siliciumcarbid, metallischem Silicium und gegebenenfalls Kohlenstoff enthält. Die Kupplungs- oder Reibscheiben weisen zusätzlich eine Verbundkeramik-Reibschicht mit einem Massenanteil an SiC im Bereich von 30 bis 99 % auf.

Die Erfindung betrifft daher Reibscheiben enthaltend eine Reibschicht und eine Kernzone aus faserverstärkten keramischen Verbundwerkstoffen, dadurch gekennzeichnet, daß die Kernzone mindestens zwei Lagen aus multidirektionalem Fasergewebe als Verstärkung enthält, wobei die einzelnen Fasergewebelagen jeweils vollständig durch die Matrix voneinander getrennt sind, und wobei mindestens 5 % der Fläche jeder Fasergewebelage, bevorzugt mindestens 10 %, und besonders bevorzugt mindestens 15 %, durch Matrixmaterial ersetzt ist, derart daß das Matrixmaterial auch in einer Richtung senkrecht zur Ebene der Gewebelagen eine kontinuierliche Phase bildet.

Unter "Fasergewebelage" oder "Fasermatten" wird hier und im folgenden jedes flächige Gebilde aus Fasern verstanden, also auch Geflechte, Gestricke, Gewirke und Vliese.

Die Fasermatten innerhalb einer Lage stellen eine hohe Zugfestigkeit in der Ebene unabhängig von der Richtung sicher und ermöglichen somit hohe Rotationsgeschwindigkeiten. Überraschenderweise wurde gefunden, daß durch Unterbrechungen in der Fläche der Fasermatten durch Matrixbereiche die interlaminare Scherfestigkeit zwischen zwei benachbarten Fasermatten verbessert wird, und damit der Zusammenhalt des Verbundwerkstoffs bei scherender oder Torsions-Beanspruchung, die beispielsweise bei Reibbelastung auftritt, gewährleistet. Darüber hinaus werden die Oxidationspfade entlang den oxidationsempfindlichen Kohlenstoffasern durch die oxidationsunempfindliche Matrix unterbrochen und das Voranschreiten der oxidativen Faserschädigung verhindert.

Erfindungsgemäß werden als Verstärkungsfasern Langfasern mit einer mittleren Länge von mindestens 50 mm verwendet, die mindestens bidirektional zu einer Fasermatte gewebt, gestrickt, gewirkt oder geflochten sind. Gegenüber unidirektionalen Faserbändern ist hierdurch eine wesentlich bessere Festigkeit gewährleistet. Ebenso ist in einfacher Weise sichergestellt, daß in einer Lage immer sowohl radiale als auch tangentiale Verstärkungskomponenten vorliegen.

Bevorzugt werden als Verstärkungsfasern kohlenstoffhaltige Fasern, insbesondere Kohlenstoffasern und/oder Graphitfasern eingesetzt. Die Matrix enthält bevorzugt Phasen aus Siliciumcarbid, sowie zusätzlich Phasen, die metallisches Silicium, gegebenenfalls legiert mit anderen Metallen, und gegebenenfalls Phasen, die elementaren Kohlenstoff und/oder Carbide von Elementen außer Silicium, enthalten. Es ist bevorzugt, daß die Matrix einen Massenanteil von mindestens 70 % an Siliciumcarbid enthält.

Ein weiterer Aspekt der Erfindung ist die Verwendung der erfindungsgemäßen Reibscheiben insbesondere als Kupplungsscheiben sowie Bremsscheiben in Fahrzeugen.

Ein weiterer Aspekt der Erfindung ist die Zusammensetzung der Reibfläche oder Reibschicht aus einer Verbundkeramik, die einen hohen Anteil an SiC-Phasen aufweist. Dieser Massenanteil beträgt bevorzugt 30 bis 99 %, bezogen auf die Masse der Reibschicht. Hierdurch wird die Verschleißfestigkeit und der Reibwert der Reibfläche verbessert, bei - wegen ihrer ähnlichen thermischen Ausdehnung - ungeschwächter Bindung an die Tragzone des Reibkörpers. Diese kraftschlüssige Anbindung an die erfindungsgemäßen Verbundwerkstoffe wird möglich durch die in der Richtung senkrecht zu den Fasergewebelagen kontinuierliche Matrix der Verbundwerkstoffe.

Der Werkstoffverbund aus Kernzone und Reibschicht eines derartigen Reibkörpers wird vorteilhafterweise durch eine Flüssiginfiltration von faserverstärkten oder faserbündelverstärkten kohlenstoffhaltigen Vorkörpern mit Siliciumschmelzen hergestellt. Derlei Verfahren sind beispielsweise aus der DE-A 198 56 721, DE-C 197 11 829 oder der DE-A 197 10 105 bekannt.

Erfindungsgemäß besitzt die Kernzone der Reibscheibe eine Faserverstärkung aus Fasermatten, wobei die Fasern insbesondere mit Polymeren oder carbonisierbaren Stoffen und/oder deren Pyrolyseprodukten beschichtet sind. Als Fasern werden bevorzugt kohlenstoffhaltige Fasern, besonders bevorzugt Kohlenstoff- oder Graphitfasern, und Fasern enthaltend Verbindungen von mindestens zwei der Elemente Si, C, B, Ti, oder N untereinander verwendet.

Die Länge der Fasern oder Faserbündel in dem Fasermatten ist bei der Anwendung als Reibscheibe bevorzugt mindestens 10 % des Durchmessers der Reibscheibe.

Die Fasermatten bzw. die sie aufbauenden Fasern werden bevorzugt mit Kohlenstoff beschichtet, der durch die Carbonisierung von Polymeren, Harzen oder Pechen gebildet wird. Hierdurch wird der sogenannte "Opferkohlenstoff" und ein Kohlenstoffschutzhülle als Faserschutz für die nachfolgende Silicierung aufgebaut. Während der Silicierung wird dieser Kohlenstoff teilweise in SiC umgewandelt. Erfindungsgemäß werden der Faserschutz und die Silicierungsbedingungen so gewählt, daß zumindest ein Teil dieses Opferkohlenstoffs, des Faserschutzes und der Fasern zu SiC und Resten an Si und C umgesetzt werden. Hierdurch entstehen die erfindungsgemäßen, die Fasermatte unterbrechenden Matrixbereiche. Dabei werden die einzelnen Fasermatten bevorzugt vollständig durch eine Schicht aus Matrixmaterial voneinander getrennt.

Die Größe und Anordnung dieser Matrixbereiche läßt eine dreidimensionale Durchdringung des Verbundwerkstoffs mit der SiC, Si und C enthaltenden Phase zu. Im Gegensatz zu dem aus dem Stand der Technik bekannten Aufbau der Kernzone aus durchgehenden Gewebematten, Prepreglagen, Vliesen und dergleichen weist die erfindungsgemäße Ausführung senkrecht zur Ebene der Fasermatten eine durchgehende SiC, Si und C enthaltende (Matrix-) Phase auf. Hierdurch wird eine hohe Scherfestigkeit und Torsionsfestigkeit zwischen benachbarten Faserlagen erreicht. Bei der Anwendung als Kupplungsscheibe ist es bevorzugt, daß die von Matrixbereichen durchsetzte Fläche der Fasermatten mindestens 20 % beträgt.

Während die durch thermische Überlastung hervorgerufene Oxidation, insbesondere der Kohlenstoffasern, bei den Verbundwerkstoffen des Standes der Technik entlang den Faserbündeln ins Innere des Verbundwerkstoffs voranschreitet, wird bei den erfindungsgemäßen Verbundwerkstoffen der weitere Fortschritt der Oxidation wirkungsvoll durch die SiC, Si und C enthaltenden Matrixbereiche gestoppt.

Die Reibschicht bzw. der Reibbelag, der auf die Kern- oder Tragzone aus faserverstärkten keramischen Verbundwerkstoffen aufgebracht ist, um den erfindungsgemäßen Reibkörper zu bilden, unterscheidet sich von der Zusammensetzung der Matrix des erfindungsgemäßen Verbundwerkstoffes durch einen verringerten Fasergehalt beziehungsweise einen höheren Anteil an Si- und SiC-Phasen. Insbesondere enthält die Reibschicht weder eine Gewebe- noch eine Langfaserverstärkung. Die maximale Faserlänge der Kurzfasern in der Reibschicht beträgt maximal 30 mm. Bevorzugt wird für die Reibschicht eine Zusammensetzung mit einem Massenanteil an SiC-Phasen von 30 bis 99 %, besonders bevorzugt von 70 bis 98 %, insbesondere von 80 bis 95 %, bezogen auf die Masse der Reibschicht. Der Massenanteil an (Kurz-)Fasern in der Reibschicht beträgt bevorzugt 20 bis 60 %, insbesondere bis zu 35 %, bezogen auf die Masse der Reibschicht. Die Dicke der Reibschicht liegt bei mindestens 0,1 mm, bevorzugt bei mindestens 0,5 mm und besonders bevorzugt bei mindestens 1 mm.

Das Verfahren zur Herstellung einer erfindungsgemäßen Reibscheibe, gliedert sich in die folgenden allgemeinen Schritte:
a) Herstellung eines Prepregs aus mindestens zwei Lagen von bidirektionalem Fasergewebe, insbesondere Kohlenstoffaser-Gewebe
b) Aushärten des Prepregs
c) Carbonisierung zu einem C/C-Körper, gegebenenfalls gefolgt von Schritt e)
d) Imprägnierung des C/C-Körpers mit carbonisierbaren Bindern (Pechen, Harzen oder Polymeren), gegebenenfalls gefolgt von Schritt c)
e) Beschichtung mindestens einer Oberfläche mit einer Masse bestehend aus carbonisierbaren Bindern und Kohlenstoff-Kurzfasern
f) Carbonisieren und Infiltration mit einer Si-Schmelze

Zur Herstellung dieser Reibkörper werden zunächst kohlenstoffhaltige poröse Grünkörper hergestellt (Schritte a bis d).

Dabei werden mindestens zwei Lagen aus mit Harz oder Kunststoffen beschichteten Fasergewebelagen oder Flächengebilden, insbesondere aus Kohlenstoffasern, übereinandergelegt, zusammengepreßt und ausgehärtet. Hier werden die aus der CFK- oder CFC-Herstellung üblichen Verfahren der Prepreg-Technologie angewendet. Wesentlich ist, daß bei diesem Fertigungsschritt carbonisierbare Binder zur Aushärtung der imprägnierten Fasergewebelagen zu einem CFK-Körper eingesetzt werden. Bei der Ablage der bidirektionalen Gewebelagen ist es von Vorteil, die Faserausrichtungen winkelversetzt anzuordnen, so daß sich über alle Lagen im Mittel eine möglichst gleichmäßige (isotrope) Faserausrichtung ausbildet. Beispielsweise wird man bei zwei Fasergewebelagen und einem Winkel der Fasern im Gewebe von ca. 90° die beiden Lagen um 45° winkelversetzt anordnen. Ebenso ist es aber auch möglich, die Formgebung durch andere aus der Faserverbundwerkstoff-Technologie bekannte Verfahren, wie zum Beispiel RTM ("reaction transfer moulding"), vorzunehmen. In einer weiteren vorteilhaften Ausgestaltung der Erfindung wird das zur Verstärkung vorgesehene Tragwerk aus Fasern gewebt oder gestrickt.

Im nächsten Schritt (c) wird der Grünkörper carbonisiert, das heißt bei Temperaturen oberhalb von ca. 750 °C unter nichtoxidierenden Bedingungen zu nichtflüchtigen Kohlenstoffrückständen zersetzt. Bevorzugt wird ein Temperaturbereich von mindestens 1600 °C. Hierzu werden auch Temperaturen oberhalb ca. 1800°C gerechnet, wo zusätzlich noch eine Graphitierung, das heißt Kristallisation des Kohlenstoffs auftritt.

Im nächsten Schritt (d) wird der CFC-Körper nochmals mit carbonisierbaren Pechen, Harzen, oder Polymeren nachverdichtet (imprägniert). Dieser Schritt legt im wesentlichen die Menge an Opferkohlenstoff und die Güte des Faserschutzes fest und kann gegebenenfalls ein- oder mehrmals wiederholt werden, wobei zwischen jeder Neuimprägnierung eine Carbonisierung stattfindet.

Auf den fertig nachverdichteten CFC-Körper wird der Vorkörper der Reibschicht oder eine entsprechende Reibschichtmasse aufgeklebt oder aufgebracht (Schritt e). Dabei erfolgt die Verbindung mit der Trag- oder Kernzone durch eine überwiegend (mehr als 50 % der Masse) Silicium enthaltende Schicht, die wie ein Hartlot wirkt.

Der Vorkörper der Reibschicht besteht aus einer porösen CFK- oder CFC-Schicht, wobei hier bevorzugt von einer preßfähigen kurzfaserbündelhaltigen Masse ausgegangen wird. Die Kurzfaserbündel enthalten üblicherweise mit kohlenstoffhaltigem Material beschichtete Kurzfasern mit einer mittleren Länge von bevorzugt bis zu 30 mm. Die Reibschichtmasse besteht bevorzugt aus einer bildbaren klebfähigen und carbonisierbaren kurzfaserbündelhaltigen Streichmasse.

Unter "bildbar" wird eine unter Druck und Wärmeeinwirkung formbare oder umformbare Masse verstanden.

Der der späteren Reibschicht entsprechende Vorkörper oder die Reibschichtmasse müssen einen dem gewünschten späteren SiC-Gehalt angemessenen Kohlenstoffgehalt aufweisen. Der als Reaktionspartner des flüssigen Siliciums bei der nachfolgenden Flüssigsilicierung auftretende Kohlenstoff geht aus kohlenstoffhaltigen Füllstoffen, typischerweise Graphit, Pyrolyserückständen von Harzen und Pechen und reaktiven Kurzfaserbündeln hervor. Für die Reibschichtmasse kann dabei vollständig auf faserförmiges Material verzichtet werden. Hierdurch kann auch eine nach der Silicierung vollständig faserfreie Reibschicht hergestellt werden.

Die mit Reibschichtmaterial versehenen geformten Körper werden hierauf siliciert. Beim Heizen auf die Prozeßtemperatur des Silicierens wird dabei nochmals eine Carbonisierung durchlaufen, die als eigene Prozeßstufe oder zusammen mit der Silicierung durchgeführt werden kann.

Die eigentliche Silicierung erfolgt bei Temperaturen oberhalb von 1420 °C durch Infiltration mit einer Siliciumschmelze, wobei auch weitere Metalle oder Halbmetalle in Massenanteilen von bis zu 50 % in der Schmelze enthalten sein können. Dabei wandelt sich in bekannter Weise zumindest ein Teil des Kohlenstoffs durch chemische Reaktion in SiC um. Werden weitere Metalle verwendet, so bilden sich Si- und SiC-Phasen neben Mischphasen aus Silicium und den eingesetzten Metallen und Phasen aus Metallcarbiden und/oder Metallsiliciden aus. Dies bedeutet, daß die Metalle oder Halbmetalle der Matrix im Si oder SiC gelöst, als Si-Legierung, als Ausscheidung im Si oder SiC, als diskrete Si-Verbindung, oder weitgehend separate Phase auftreten können.

Typischerweise werden diese Metalle oder Halbmetalle bei der Flüssigsilicierung als Legierungsbestandteile.des Siliciums in den Verbundwerkstoff eingebracht und reichern sich in den Siliciumphasen des Werkstoffes an. Zu den bevorzugten Metallen zählen insbesondere Mo, Ni, Cr, Ti, Fe, Cu, Al und B.

Die erfindungsgemäßen Kupplungsscheiben widerstehen auch den erhöhten Drehzahlen bzw. Rotationsgeschwindigkeiten ohne Versagen. Auch bei Drehzahlen, die bei Kupplungsscheiben der modernen Hochleistungssportwagen auftreten, zeigte sich keine Rißbildung.

## Patentansprüche

1. Reibscheiben enthaltend eine Reibschicht und eine Kernzone aus faserverstärkten keramischen Verbundwerkstoffen, **dadurch gekennzeichnet, daß** die Kernzone mindestens zwei Lagen aus multidirektionalem Fasergewebe als Verstärkung enthält, wobei die einzelnen Fasergewebelagen jeweils vollständig durch die Matrix voneinander getrennt sind, und wobei mindestens 5 % der Fläche jeder Fasergewebelage durch Matrixmaterial ersetzt ist, derart daß das Matrixmaterial auch in einer Richtung senkrecht zur Ebene der Gewebelagen eine kontinuierliche Phase bildet.

2. Reibscheiben nach Anspruch 1, **dadurch gekennzeichnet, daß** die Verstärkungsfasern kohlenstoffhaltige Fasern sind

3. Reibscheiben nach Anspruch 1, **dadurch gekennzeichnet, daß** die Verstärkungsfasern eine mittlere Länge von mindestens 50 mm aufweisen.

4. Reibscheiben nach Anspruch 1, **dadurch gekennzeichnet, daß** die Matrix in der Kernzone Phasen von Siliciumcarbid, metallischem Silicium und gegebenenfalls Kohlenstoff enthält.

5. Reibscheiben nach Anspruch 1, **dadurch gekennzeichnet, daß** die mindestens zwei Lagen eines bidirektionalen Fasergewebes parallel zur Scheibenebene ausgerichtet sind, daß die Matrix Siliciumcarbid, Kohlenstoff und Silicium enthält, und daß die Reibschicht einen Massenanteil an Siliciumcarbid von 30 bis 99 % enthält.

6. Reibscheiben nach Anspruch 1, **dadurch gekennzeichnet, daß** die mittlere Länge der Fasern oder Faserbündel innerhalb einzelner Fasergewebelagen mindestens 10 % des Durchmessers der Reibscheibe entspricht.

7. Reibscheiben nach Anspruch 1, **dadurch gekennzeichnet, daß** die Matrix in der Kernzone einen Massenanteil von mindestens 70 % an Siliciumcarbid enthält.

8. Reibscheiben nach Anspruch 1, **dadurch gekennzeichnet, daß** die Reibschicht einen Massenanteil von 20 bis 60 % Kohlenstoffkurzfasern mit einer mittleren Länge von maximal 30 um enthält.

9. Reibscheiben nach Anspruch 1, **dadurch gekennzeichnet, daß** die Reibschicht von der Kernzone durch eine überwiegend Silicium enthaltende Schicht getrennt ist.

10. Verfahren zur Herstellung von Reibscheiben gemäß Anspruch 1 aus faserverstärkter Verbundkeramik, enthaltend eine Kernzone aus Kohlenstoffasergewebe-verstärkter Keramik und mindestens einer SiC-reichen Reibschicht, **gekennzeichnet durch** die folgenden Schritte:
a) Herstellung eines Prepregs aus mindestens 2 Lagen an bidirektionalem Kohlenstoffasergewebe, wobei die Fasergewebelagen mit Polymeren, Harzen oder Pechen beschichtet werden, die bei Carbonisierung Kohlenstoff bilden, derart daß die einzelnen Fasergewebelagen vollständig **durch** eine Schicht dieses Materials voneinander getrennt werden,
b) Aushärten der Prepregs
c) Carbonisierung zu einem C/C-Körper
d) Imprägnierung des C/C-Körpers mit carbonisierbaren Pechen, Harzen oder Polymeren, gegebenenfalls gefolgt von Schritt c)
e) Beschichtung mindestens einer Scheibenoberfläche mit einer kohlenstoffhaltigen Reibschichtmasse oder Aufkleben eines Reibschicht-Vorkörpers auf mindestens eine Scheibenoberfläche
f) Carbonisieren und Infiltration mit einer Si-Schmelze,
**dadurch gekennzeichnet, daß** der Faserschutz und die Silicierungsbedingungen so gewählt werden, daß in den Fasergewebelagen diese unterbrechende Matrixbereiche entstehen, deren Fläche mindestens 5 % der Fläche jeder Fasergewebelage beträgt, derart daß das Matrixmaterial auch in einer Richtung senkrecht zur Ebene der Fasergewebelagen eine kontinuierliche Phase bildet.

11. Verfahren nach Anspruch 10, **dadurch gekennzeichnet, daß** die Beschichtung der Kohlenstoffasergewebe und/oder der sie bildenden Fasern bei der Bildung des Prepregs im Schritt a), die Carbonisierung im Schritt b), die Imprägnierung im Schritt d) und die Silicierung im Schritt f) so durchgeführt werden, daß innerhalb der Köhlenstoffasergewebelagen zusammenhängende Matrixbereiche gebildet werden, deren maximale laterale Ausdehnung bei 20 % des Scheibendurchmessers liegt.

12. Verfahren nach Anspruch 10, **dadurch gekennzeichnet, daß** die kohlenstoffhaltige Reibschichtmasse oder der Reibschichtvorkörper so ausgewählt werden, daß die Matrix der Reibschicht einen Massenanteil von mindestens 70 % Siliciumcarbid enthält.

13. Verfahren nach Anspruch 10, **dadurch gekennzeichnet, daß** die Carbonisierung bei einer Temperatur von mindestens 1600 °C durchgerührt wird.

14. Verwendung von Reibscheiben nach Anspruch 1 als Kupplungsscheiben in Reibkupplungen von Kraftfahrzeugen.

## Claims

1. A friction disk comprising a friction layer and a core zone comprising fiber-reinforced ceramic composites, wherein the core zone comprises at least two layers of a multidirectional woven fiber fabric as reinforcement, with the individual layers of woven fiber fabric being in each case separated completely from one another by the matrix and at least 5% of the area of each layer of woven fiber fabric being replaced by matrix material so that the matrix material also forms a continuos phase in a direction perpendicular to the plane of the woven fabric.

2. A friction disk as claimed in claim 1, wherein the reinforcing fibers are carbon-containing fibers.

3. A friction disk as claimed in claim 1, wherein the reinforcing fibers have a mean length of at least 50 mm.

4. A friction disk as claimed in claim 1, wherein the matrix comprises phases of silicon carbide, metallic silicon and optionally carbon.

5. A friction disk as claimed in claim 1, wherein the at least two layers of a bidirectional woven fiber fabric are aligned parallel to the plane of the disk, the matrix comprising silicon carbide, carbon and silicon and the friction layer has a mass fraction of silicon carbide of from 30 to 99%.

6. A friction disk as claimed in claim 1, wherein the mean length of the fibres or bundles of fibres within single layers of woven fiber fabric corresponds to at least 10% of the diameter of the friction disk.

7. A friction disk as claimed in claim 1, wherein the matrix of the core zone has a mass fraction of at least 70% of silicon carbide.

8. A friction disk as claimed in claim 1, wherein the friction layer has a mass fraction of from 20 to 60% of short carbon fibers having a mean length of not more than 30 mm.

9. A friction disk as claimed in claim 1, wherein the friction layer is separated from the core zone by a layer comprising predominantly silicon.

10. A process for producing friction disks as claimed in claim 1 of fiber-reinforced composite ceramic comprising a core zone of ceramic reinforced by woven carbon fiber fabric and at least one SiC-rich friction layer, which comprises the following steps:
a) production of a prepreg comprising at least 2 layers of a bidirectional woven fiber fabric, with the layers of woven fiber fabric being coated with polymers, resins or pitches which form carbon on carbonization so that the individual layers of woven fiber fabric are completely separated from one another by one layer of this material,
b) curing of the prepreg,
c) carbonization to form a C/C body,
d) impregnation of the C/C body with carbonizable pitches, resins or polymers, if desired followed by step c),
e) coating of at least one surface of the disk with a carbon-containing friction layer composition or adhesively bonding a friction layer precursor body onto at least one surface of the disk,
f) carbonization and infiltration with an Si melt,
wherein the fiber protection and the silicization conditions are selected so that matrix regions which intersperse the layers of woven fabric and have an area which is at least 5% of the area of each layer of woven fiber fabric are formed in the layers of woven fiber fabric so that the matrix material also forms a continuos phase in a direction perpendicular to the plane of the layers of woven fiber fabric.

11. The process as claimed in claim 9, wherein the coating of the woven carbon fiber fabrics and/or the fibers forming them during the formation of the prepreg in step a), the carbonization in step b), the impregnation in step d) and the silicization in step f) are carried out so that coherent matrix regions whose maximum lateral dimension is 20% of the disk diameter are formed within the layers of woven carbon fiber fabric.

12. The process as claimed in claim 9, wherein the carbon-containing friction layer compositions or friction layer precursor body are selected so that the matrix of the friction layer comprises a mass fraction of at least 70% of silicon carbide.

13. The process as claimed in claim 9, wherein the carbonization is carried out at a temperature of at least 1600°C.

14. The use of friction disks as claimed in claim 1 as clutch disks in friction clutches of motor vehicles.

## Revendications

1. Disques de friction contenant une couche de friction et une zone centrale en matériaux composites céramiques renforcés par des fibres, **caractérisés en ce que** la zone centrale contient un renforcement d'au moins deux couches faites de tissu en fibre multidirectionnelle, les différentes couches individuelles de tissu en fibre étant complètement séparées l'une de l'autre par une matrice, et au moins 5 % de la surface de chaque couche de tissu en fibre étant remplacée par du matériau de la matrice de façon à ce que le matériau de la matrice forme également une phase continue dans la direction perpendiculaire au plan des couches de tissu.

2. Disques de friction selon la revendication 1, **caractérisés en ce que** les fibres de renforcement sont des fibres carbonées.

3. Disques de friction selon la revendication 1, **caractérisés en ce que** les fibres de renforcement possèdent une longueur moyenne d'au moins 50 mm.

4. Disques de friction selon la revendication 1, **caractérisés en ce que** la matrice de la zone centrale contient des phases de carbure de silicium, de silicium métallique et, éventuellement, du carbone.

5. Disques de friction selon la revendication 1, **caractérisés en ce qu'**au moins deux couches d'un tissu bidirectionnel en fibre sont orientées parallèlement au plan du disque, **en ce que** la matrice contient du carbure de silicium, du carbone et du silicium et **en ce que** la couche de friction contient un pourcentage de carbure de silicium situé entre 30 et 99 % en masse.

6. Disques de friction selon la revendication 1, **caractérisés en ce que** la longueur moyenne des fibres ou des faisceaux de fibres, à l'intérieur des couches individuelles de tissu en fibre, corresponde au moins à 10 % du diamètre du disque de friction.

7. Disques de friction selon la revendication 1, **caractérisés en ce que** la matrice dans la zone centrale contient un pourcentage de carbure de silicium d'au moins 70 % en masse.

8. Disques de friction selon la revendication 1, **caractérisés en ce que** la couche de friction contient un pourcentage de fibres de carbone courtes entre 20 et 60 % en masse avec une longueur moyenne maximale de 30 mm.

9. Disques de friction selon la revendication 1, **caractérisés en ce que** la couche de friction est séparée de la zone centrale par une couche qui contient principalement du silicium.

10. Procédé de fabrication de disques de friction selon la revendication 1 en matériaux composites renforcés par des fibres, contenant une zone centrale en céramique renforcée par un tissu en fibre de carbone et au moins une couche de friction riche en SiC, **caractérisé par** les étapes suivantes :
a) fabrication d'un préimprégné (prepreg) en deux couches, au moins, de tissu en fibre de carbone bidirectionnel, les couches de tissu en fibre étant recouvertes de polymères, résines ou poix, qui forment du carbone lors de la carbonisation de façon à ce que les couches de tissu en fibres individuelles soient complètement séparées par une couche de ce matériau,
b) durcissement du préimprégné
c) carbonisation pour fabriquer un corps C/C
d) imprégnation du corps C/C avec des poix, des résines ou des polymères carbonisables, éventuellement suivi de l'étape c)
e) revêtement d'au moins une surface du disque avec une substance de couche de friction contenant du carbone ou collage d'une préforme de couche de friction sur au moins une surface du disque
f) carbonisation et diffusion de Silicium fondu,
**caractérisé en ce que** l'agent de protection des fibres et les conditions de siliciuration sont choisis tels que ces régions de matrice se forment dans les couches de tissu en fibre pour les interrompre, leurs surfaces s'élevant à au moins 5% de la surface de chaque couche de tissu en fibre, de façon à ce que le matériau de la matrice forme également une phase continue dans la direction perpendiculaire au plan des couches de tissu.

11. Procédé selon la revendication 10, **caractérisé en ce que** le recouvrement des tissus en fibre de carbone et/ou des fibres qui forment le tissu est exécuté pendant la formation du préimprégné à l'étape a), la carbonisation à l'étape b), l'imprégnation à l'étape d) et la siliciuration à l'étape f) tel qu'à l'intérieur des couches de tissu en fibre de carbone des régions de matrice continues soient créées, leur extension maximale latérale étant d'environ 20% du diamètre du disque.

12. Procédé selon la revendication 10, **caractérisé en ce que** la substance de la couche de friction qui contient du carbone ou la préforme de la couche de friction est choisie de façon à ce que la matrice de la couche de friction contienne un pourcentage de carbure de silicium de 70% au moins en masse.

13. Procédé selon la revendication 10, **caractérisé en ce que** la carbonisation est exécutée à une température de 1600 °C au moins.

14. Utilisation de disques de friction selon la revendication 1 comme disques d'embrayage dans des embrayages à friction de véhicules automobiles.
